# EUROPEAN PATENT SPECIFICATION

(11) **EP 0 979 710 B1**
(45) Date of publication and mention of the grant of the patent: **19.05.2004**
(21) Application number: 98203561.0
(22) Date of filing: 21.10.1998
(51) Int. Cl.: B26F 3/00, B23K 26/00

(54) **Releasing of glazing panels**
Verfahren zum Lösen von Glasscheiben
Démontage de panneaux de verre

(30) Priority: 11.08.1998 GB 9817441
(43) Date of publication of application: 16.02.2000
(73) Proprietor: Carglass Luxembourg Sarl - Zug Branch, 6300 Zug (CH)
(72) Inventor: Kiernan, Michael Noel, Blackpill Swansea SA3 5BL (GB); Davies, Christopher, Llanelli Carmarthenshire SA15 7JN (GB); Clement, Robert Marc, Rhos Pontardawe SA8 3HD (GB)
(74) Representative: Davies, Gregory Mark

(56) References cited:
- EP-A- 0 215 960
- EP-A- 0 217 019
- EP-A- 0 521 825
- EP-A- 0 603 047
- WO-A-96/17737
- DE-A- 4 320 341
- US-A- 5 269 868
- DATABASE WPI Section PQ, Week 9434 Derwent Publications Ltd., London, GB; Class P34, AN 94-277519 XP002094953 & RU 2 008 042 C (PAKT ASSOC) , 28 February 1994
- DATABASE WPI Section PQ, Week 9408 Derwent Publications Ltd., London, GB; Class P14, AN 94-063468 XP002094954 & SU 1 789 150 A (KISH POLY) , 23 January 1993

## Description

The present invention relates to the releasing of glazing panels from supporting frames, and more specifically to the releasing of laminated glazing panels from supporting frames (such as laminated vehicle windscreens or architectural window panes).

Reference to glazing panels should be understood to mean panels, screens, or windows of glass, plastics or any other material substantially transparent to wavelengths in the visible range of the spectrum.

Vehicle windscreens typically comprise a laminated panel structure comprising an outer glass layer, an inner glass layer and an interlayer, interposed between the outer and inner glass layers. The interlayer typically comprises a material transparent to some wavelengths of visible light but absorbent to ultraviolet radiation (U.V). (In some circumstances the inter layer may be absorbent to some wavelengths of visible light and also typically some infra red radiation). The inter layer is typically tinted to absorb specific wavelengths (particularly U.V.).

WO-A-9617737 discloses a method and apparatus for releasing bonded transparent screens (typically vehicle windscreens) from supporting frames to which they are bonded. This document may be described as disclosing an optical glazing panel releaser apparatus comprising light energy delivery means operable to transmit light energy through a glazing panel to effect release of the panel bonded to a frame by interposed bonding material.

According to the present invention, the energy delivery means comprises electrical gas discharge apparatus and includes a light transmission window, the light from the electrical gas discharge apparatus passing through the transmission window and attenuating with distance from the delivery means.

The light energy delivered is preferably of a wavelength substantially in the range 300nm-1500nm (more preferably in the range 400nm-700nm).

The light energy delivered is desirably pulsed according to a predetermined regime, preferably such that the pulse duration (T on) is less than the inter-pulse interval (T off).

Desirably, a single pulse of light energy delivered is of sufficient energy to effect separation of the screen from the frame along a length of the bonding material.

The apparatus preferably includes a pulse forming network (which may include a capacitor and inductor arrangement) to drive the apparatus to produce a light pulse. The apparatus preferably further comprises a trigger network for initiating operation of the pulse forming network.

Control means is preferably provided for controlling one or more apparatus parameters including the minimum permissible time elapsing between subsequent light pulses.

The control means is therefore preferably linked to the trigger network and/or the pulse forming network.

It is preferred that means is provided for selectively adjusting the intensity of the light delivered. This is important in view of the differing degree to which various tinted glazing panels absorb light energy in the wavelength range contemplated. It is preferred that the apparatus includes different preset parameter settings which may be switched dependent upon the glazing panel tint to be debonded.

The light energy may be absorbed at the bonding material/panel interface either by the bonding material itself, or by an absorbing layer comprising the panel (such as the frit layer commonly found on vehicle glazing panels) or by a suitable light absorbent coating provided at the interface.

The light energy delivery means may be tracked about the periphery of the panel, preferably at a predetermined rate dependent upon the power of the light energy delivery means and the pulse regime. Advantageously tracking means (preferably motorised tracking means) is provided for this purpose.

Alternatively, the light energy delivery means may be hand held and positioned on the glazing manually by an operator. The delivery means may therefore have a manual trigger for initiating a light pulse when the delivery head is positioned to the operators satisfaction.

In one embodiment, the light energy delivered comprises a plurality of wavelengths, most preferably in the visible range of the spectrum. In one embodiment it is preferred that the light energy is non-coherent. The light energy attenuates rapidly with distance such that at a few centimetres (preferably less than 10cm, more preferably less than 5cm) from the energy delivery means the light energy density is significantly diminished from its maximum value (preferably falling to 50% maximum value or below). The pulse repetition frequency (defining T off) is beneficially substantially in the range 0.1Hz-10Hz (most preferably substantially in the range 0.3Hz-1Hz). The energy delivered is preferably substantially in the range 100Joules-10,000Joules per pulse (more preferably in the range 500-1500Joules per pulse). The pulse duration (T on) is preferably substantially in the range 1µs-100ms, more preferably 1ms-2ms.

Desirably, operation of the gas discharge apparatus is controlled to limit the pulse rate and/or duration of the light pulse.

The operation of the gas discharge apparatus is preferably controlled by:
i) charging a capacitor arrangement;
ii) initiating a trigger pulse to discharge the capacitor arrangement; and,
iii) discharging the capacitor arrangement through an inductor to the gas discharge apparatus.

The electrical gas discharge apparatus is controlled to limit the pulse rate of the light delivered. The apparatus preferably includes a pulse forming network having a capacitor and inductor arrangement in which the capacitor discharges through the inductor to drive the electrical gas discharge apparatus to produce a light pulse. The apparatus preferably further comprises a trigger network for initiating the capacitor of the pulse forming network to discharge.

Control means is preferably provided for controlling one or more apparatus parameters including the minimum permissible time elapsing between subsequent discharge pulses of the electrical gas discharge apparatus.

The electrical gas discharge apparatus preferably comprises an electrical gas discharge tube.

The electrical gas discharge apparatus desirably comprises a reflector (preferably a parabolic reflector) arranged to direct emitted light in a predetermined direction.

It has been found that for laminated screens or panels comprising a tinted interlayer in particular, operation of the light energy delivery means in pulsed mode according to the pulsing regime defined herein, provides enhanced results, because energy absorption in the body of the screen or panel, particularly at the interlayer, is minimised.

The invention will now be further described in specific embodiments by way of example only and with reference to the accompanying drawings in which:
Figure 1 is a diagrammatic representation showing pulsed light operation of the light energy and the effect on glazing panel and frit temperature;
Figure 2 is a representation similar to that shown in Figure 1 showing prior art continuous wave laser radiation and the effect on frit and glazing panel temperature;
Figure 3 is a schematic representation of a first embodiment of light energy delivery means according to the invention;
Figure 4 is a system diagram of a apparatus including the light energy delivery means of figure 3;
Figure 5 is a block diagram of the pulse forming network of the system shown in figure 4;

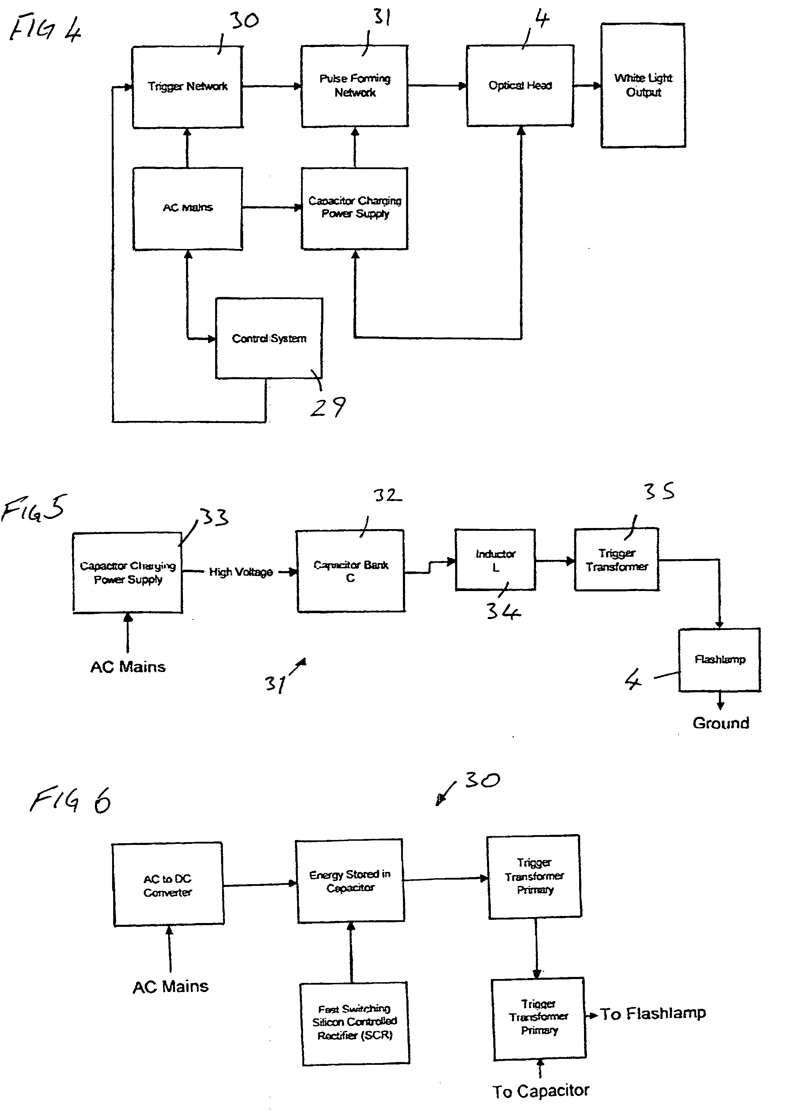

Figure 6 is a block diagram of the trigger network of the system shown in figure 4

In the application shown, the apparatus 1 is used to release a vehicular glazing panel (windscreen 16) from a supporting frame 7 to which it is bonded by an interposed, dark coloured polyurethane bonding bead 8 which extends around the entire periphery of the panel 16 in contact with frame 7.

The windscreen panel 16 comprises an outer glass layer 9, an inner glass layer 10 and intermediately therebetween, an interlayer 11 comprising a tinted sheet material which is transparent to certain wavelengths of visible light but opaque to others and also to ultra violet (U.V.) radiation. The purpose of the interlayer 11 is to provide structural strength for the windscreen 16 such that in the event of impact the screen remains intact, and also to provide a U.V. barrier.

Immediately adjacent the bonding bead 8, the periphery of the inner layer 10 of the windscreen panel 16 is provided with a bonded glass frit layer 12 which is typically dark in colour (more typically black in colour). The purpose of the frit layer is to inhibit the passage of ultra-violet radiation through the screen to impinge upon the polyurethane bonding bead 8 which is typically degradable upon exposure to UV radiation.

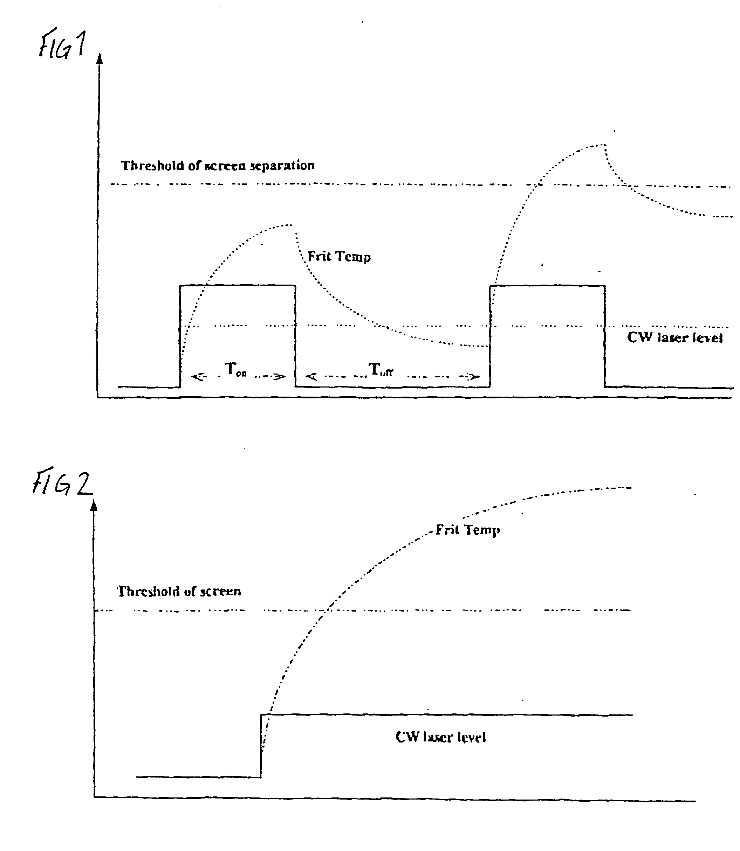

Figures 1 and 2 compare light pulsed in accordance with the preferred pulsing regime of the present invention (which will be described in detail hereafter), with continuous wave laser operation known from the prior art system disclosed in WO-A-9617737, and the associated effect on the temperature of the frit layer 12 in relation to threshold of glazing panel integrity (particularly delamination at the panel interlayer 11).

The use of continuous wave laser radiation results in excess heat build-up within the body of the panel 16, particularly at the interlayer 11. This has the effect that increased power is required than would be the case where significant heat build up does not occur within the body of panel 16. Furthermore, the heat build-up within the body of panel 16 at interlayer 11 has been found to result in glass fracture in the region of the interlayer, which increases the absorption within the body of panel 6 leading to a "chain event" in which increasingly greater amounts of energy delivered is absorbed within the body of the panel 16. This results in less energy reaching the frit layer 12/bonding bead 8 interface, thereby reducing the effectiveness of the separation.

The use of pulsed light operation provides repeated bursts of energy to be delivered to the frit layer 12/bonding bead 8 interface, with sufficient time between pulsed energy bursts (T off) to allow heat absorbed within the body of the glazing panel (including at interlayer 11) to be dissipated.

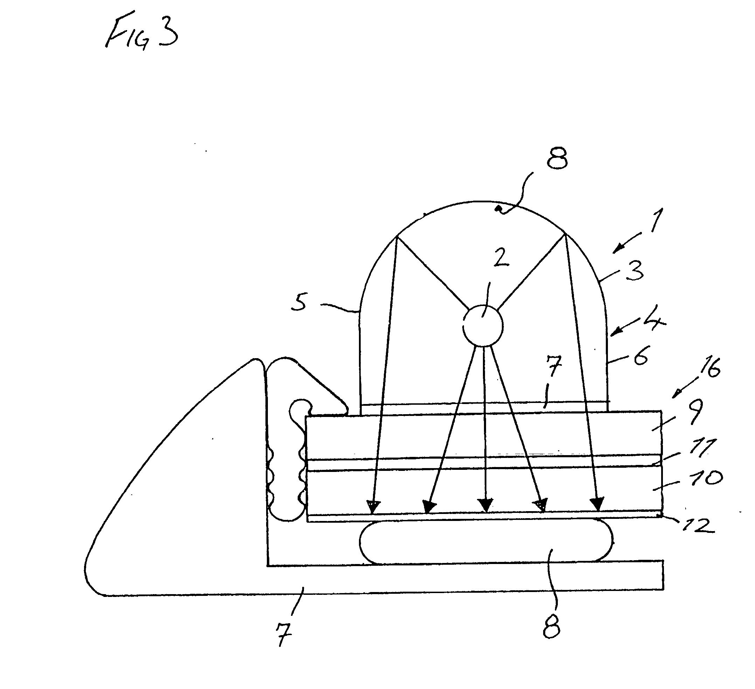

Referring to Figure 3, the apparatus generally designated 1 comprises a delivery head 4 including an electric gas discharge tube 2 containing a high pressure Noble/inert gas such as Xenon or Krypton. Discharge tube operates to produce an output burst of light of a range of wavelengths in the visible spectrum (approximately in the range 400nm to 700nm). The energy delivered, per pulse is typically in the range 500-1500 Joules however the energy dissipates (attenuates) rapidly with distance from the tube. (This is an important operational aspect, as will be described further below).

A housing/casing 3 surrounds the discharge tube and includes shielding sidewalls 5,6 and a spanning visible light transmissible window 7. A parabolic reflector wall 8 is positioned opposite the window 7 to reflect light from the reverse side of discharge tube 2 to pass through the window 7.

Referring to figure 4, the tube is controlled to produce high intensity pulses according to a predetermined pulse regime by means of a control unit 29 operating to appropriate programmed instructions. Control unit 29, controls the operation of a trigger network 30 to activate a pulse forming network 31 to supply current to the tube 2 to produce a light pulse having the desired characteristics.

Referring to figure 5, the pulse forming network 31 includes a capacitor bank 32 charged to a preset voltage by a power supply 33. The capacitor bank 32 remains charged until a trigger pulse from the trigger network initiates discharge in the discharge tube 2, when charge stored in capacitor bank 32 discharges through inductor 34 and a secondary trigger transformer 35, to the tube 2. The time constant of the discharge (and hence the light pulse duration and "profile") is determined by the values of the inductor 34 and capacitor bank 32. For an operational system a pulse duration of 1ms-2ms has been found to be suitable. For present purposes, pulse duration should be understood to be the time interval between the light power reaching half its maximum value and subsequently falling to half its maximum value. The required pulse duration varies depending upon the optical properties of the glazing panel to be released. For example different glazing tints require different levels of energy to be supplied to effect release, and hence different pulse durations and also different power levels. The capacitor bank 32 and inductor 34 can therefore be reset to appropriate values depending upon the glazing panel to be released in order to modify the "profile" and. power of the pulse delivered. The apparatus may be provided with preset settings selectable by the operator (or automatically) appropriate to common glazing tints or other known variables. To adjust the optical power of the apparatus the capacitor charging power supply may be varied.

The pulse repetition frequency (corresponding to the length of the inter-pulse interval (T off)) is important to ensure that the period between successive pulses is sufficient to allow the heat absorbed in the thickness of the screen to dissipate before more energy is delivered. The control unit 29 acts to override the manual trigger to inhibit the trigger network 30 from initiating discharge until the required time period has elapsed. The pulse repetition frequency is typically controlled to be in the range 0.3Hz-1Hz.

The energy delivered per light pulse is selected according to the tint or other qualities of the glazing panel but typically varies between 500-1500Joules per pulse. Because non-laser light is used, the energy attenuates rapidly with distance from the optical head 4 and is therefore sufficient to effect debonding of the glazing panel but less susceptible to unauthorised or accidental operator misuse. This is an important safety feature of using this embodiment.

In use, the optical delivery head is positioned as shown in Figure 3 and a manually actuatable trigger is operated to produce a single light pulse which passes through the screen 6 and is absorbed at the frit layer 12 and/or the bonding bead 8. The frit 12 or bonding bead rapidly heats up and separates from the screen typically either by glass ablation, temperature carburisation of the bead 8, or other thermal mechanisms. Typically a single shot/pulse is sufficient to effect release over a length of screen corresponding to the length of the discharge tube 2 (typically 5-15cm) although multiple shots may be used (for example at lower power to minimise frit damage). The operator then moves on to an adjacent portion of the screen periphery before instigating a further light pulse. The procedure is repeated about the entire width of the screen to effect complete release.

It has been found that significantly improved results are achieved where the light delivered is in the visible range of the spectrum, and the light is pulsed according to a regime in which a series of discrete pulses of light are transmitted, the pulse duration (T on) being substantially in the range 1µs to 100ms (more preferably in the range 1ms-2ms) and the pulse repetition frequency being substantially in the range 0.1Hz-10Hz (more preferably in the range 0.3Hz-1Hz).

Use of the pulsing regime described herein and lower wavelengths of light (in the visible spectrum) have been found to provide significantly enhanced results in which a greater proportion of the energy delivered is concentrated at the frit layer 12/bonding bead 8 interface, and excess heat build-up (and associated glass fracture) at interlayer 11 is avoided or at least ameliorated.

The invention has primarily been described in relation to releasing of laminated glazing panels. It will however be understood that the invention is equally suitable for use with other glazing panels providing similar benefits in minimising overheating of material comprising the panel.

## Claims

1. Optical glazing panel releaser apparatus comprising light energy delivery means operable to transmit light energy through a glazing panel to effect release of the panel bonded to a frame by interposed bonding material, **characterised in that** the energy delivery means comprises electrical gas discharge apparatus and includes a light transmission window, the light from the electrical gas discharge apparatus passing through the transmission window and attenuating with distance from the delivery means.

2. Apparatus according to claim 1, which is controllable to pulse the light energy delivered.

3. Apparatus according to claim 2, wherein the apparatus is controllable to adjust and/ or limit:
the pulse repetition rate of the light delivered; and/or,
the pulse duration of the light delivered, and/or,
the light intensity delivered.

4. Apparatus according to any preceding claim, wherein the delivery means includes a manual trigger for initiating a light pulse when the delivery head is positioned to the operators satisfaction.

5. Apparatus according to any preceding claim, wherein means is provided for selectively adjusting the intensity of the light delivered.

6. Apparatus according to any preceding claim, wherein the apparatus includes different preset settings which may be switched to alter one or more parameters of the light energy delivered, dependent upon the tint of the glazing panel to be debonded.

7. Apparatus according to claim 6, wherein light energy parameters include:
light intensity; and/or,
pulse duration; and/or,
pulse interval.

8. Apparatus according to any preceding claim, including a pulse forming network having a capacitor and inductor arrangement in which the capacitor discharges through the inductor to drive the electrical gas discharge apparatus to produce a light pulse.

9. Apparatus according to claim 8, including a trigger network for initiating the capacitor of the pulse forming network to discharge.

10. Apparatus according to any preceding claim, including control means for controlling one or more apparatus parameters including the minimum permissible time elapsing between subsequent discharge pulses of the electrical gas discharge apparatus.

11. Apparatus according to any preceding claim, wherein the electrical discharge apparatus comprises an electrical gas discharge tube.

12. Apparatus according to any preceding claim, wherein the electrical gas discharge apparatus comprises a reflector arranged to direct emitted light in a predetermined direction.

## Patentansprüche

1. Lösevorrichtung für ein optisches Verglasungsfeld, welche eine Lichtenergie-Zuführungseinrichtung aufweist, die betreibbar ist, Lichtenergie durch ein Verglasungsfeld zu übertragen, um das Lösen des Felds, welches an einem Rahmen durch dazwischen angeordnetes Klebematerial angeklebt ist, zu bewirken, **dadurch gekennzeichnet, dass** die Energiezuführungseinrichtung eine elektrische Gasentladungsvorrichtung aufweist und ein Lichtübertragungsfenster besitzt, wobei das Licht von der elektrischen Gasentladungsvorrichtung durch das Übertragungsfenster läuft und mit dem Abstand von der Zuführungseinrichtung gedämpft wird.

2. Vorrichtung nach Anspruch 1, die steuerbar ist, die gelieferte Lichtenergie zu takten.

3. Vorrichtung nach Anspruch 2, wobei die Vorrichtung steuerbar ist, einzustellen und/oder zu beschränken:
die Impulswiederholungsrate des gelieferten Lichtes; und/oder
die Impulsdauer des gelieferten Lichts, und/oder
die gelieferte Lichtintensität.

4. Vorrichtung nach einem der vorhergehenden Ansprüche, wobei die Zuführungseinrichtung einen manuellen Auslöser aufweist, um einen Lichtimpuls in Gang zu bringen, wenn der Zuführungskopf zur Zufriedenheit der Bedienungsperson positioniert ist.

5. Vorrichtung nach einem der vorhergehenden Ansprüche, wobei eine Einrichtung vorgesehen ist, um die Intensität des gelieferten Lichts selektiv einzustellen.

6. Vorrichtung nach einem der vorhergehenden Ansprüche, wobei die Vorrichtung unterschiedliche Voreinstellungen aufweist, die umgeschaltet werden können, um einen oder mehrere Parameter der gelieferten Lichtenergie in Abhängigkeit von der Tönung des Verglasungsfelds, welches zu lösen ist, zu ändern.

7. Vorrichtung nach Anspruch 6, wobei die Lichtenergieparameter aufweist:
Lichtintensität; und/oder,
Impulsdauer; und/oder
Impulsintervall.

8. Vorrichtung nach einem der vorhergehenden Ansprüche, welche ein Impulsformungsnetzwerk aufweist, welches eine Kondensator- und Induktivitätsanordnung aufweist, bei dem der Kondensator sich über die Induktivität entlädt, um die elektrische Gasentladungsvorrichtung anzusteuern, um einen Lichtimpuls zu erzeugen.

9. Vorrichtung nach Anspruch 8, welche ein Auslösemetzwerk aufweist, um zu initialisieren, dass sich der Kondensator des Impulsbildungsnetzwerks entlädt.

10. Vorrichtung nach einem der vorhergehenden Ansprüche, welche eine Steuerungseinrichtung aufweist, um einen oder mehrere Vorrichtungsparameter einschließlich der minimalen zulässigen Ablaufzeit zwischen aufeinanderfolgenden Entladungsimpulsen der elektrischen Gasentladungsvorrichtung zu steuern.

11. Vorrichtung nach einem der vorhergehenden Ansprüche, wobei die elektrische Entladungsvorrichtung eine elektrische Gasentladungsröhre aufweist.

12. Vorrichtung nach einem der vorhergehenden Ansprüche, wobei die elektrische Gasentladungsvorrichtung einen Reflektor aufweist, der angeordnet ist, emittiertes Licht in eine vorher festgelegte Richtung zu lenken.

## Revendications

1. Appareil de dégagement de panneaux de verre optique comprenant des moyens de libération d'énergie lumineuse pouvant fonctionner pour transmettre l'énergie lumineuse à travers un panneau de verre afin de dégager le panneau lié à un cadre par un matériau de liaison interposé, **caractérisé en ce que** les moyens de libération d'énergie comprennent un appareil de décharge gazeuse électrique et comprennent une fenêtre de transmission de lumière, la lumière provenant de l'appareil de décharge gazeuse électrique traversant la fenêtre de transmission et diminuant en s'éloignant des moyens de libération.

2. Appareil selon la revendication 1, qui peut être contrôlé pour pulser l'énergie lumineuse libérée.

3. Appareil selon la revendication 2, dans lequel l'appareil peut être contrôlé pour ajuster et/ou limiter :
le taux de répétition de pulsation de la lumière libérée ; et/ou,
la durée de pulsation de la lumière libérée, et/ou,
l'intensité lumineuse libérée.

4. Appareil selon l'une quelconque des revendications précédentes, dans lequel les moyens de libération comprennent un déclencheur manuel destiné pour lancer une pulsation lumineuse lorsque la tête de libération est positionnée à la satisfaction des opérateurs.

5. Appareil selon l'une quelconque des revendications précédentes, dans lequel des moyens sont fournis pour ajuster de manière sélective l'intensité de la lumière libérée.

6. Appareil selon l'une quelconque des revendications précédentes, dans lequel l'appareil comprend différents réglages pré-réglés qui peuvent être commutés afin de modifier un ou plusieurs paramètres de l'énergie lumineuse libérée, en fonction de la teinte du panneau de verre à démonter.

7. Appareil selon la revendication 6, dans lequel les paramètres de l'énergie lumineuse comprennent :
l'intensité de la lumière ; et/ou,
la durée de pulsation ; et/ou
l'intervalle entre les pulsations.

8. Appareil selon l'une quelconque des revendications précédentes, comprenant un réseau de formation de pulsations ayant un agencement de condensateur et de bobine d'induction dans lequel le condensateur se décharge par l'intermédiaire de la bobine d'induction pour amener l'appareil de décharge gazeuse électrique à produire une pulsation lumineuse.

9. Appareil selon la revendication 8, comprenant un réseau déclencheur pour amener le condensateur du réseau de formation de pulsations à se décharger.

10. Appareil selon l'une quelconque des revendications précédentes, comprenant des moyens de contrôle pour contrôler un ou plusieurs paramètres de l'appareil comprenant le temps minimum autorisé qui s'écoule entre deux pulsations de décharge de l'appareil de décharge gazeuse électrique.

11. Appareil selon l'une quelconque des revendications précédentes, dans lequel l'appareil de décharge électrique comprend un tube de décharge gazeuse électrique.

12. Appareil selon l'une quelconque des revendications précédentes, dans lequel l'appareil de décharge gazeuse électrique comprend un réflecteur agencé pour diriger la lumière émise dans une direction prédéterminée.
